(19) Europäisches Patentamt
European Patent Office
Office européen des brevets

(11) **EP 2 394 177 B1**

(12) **EUROPÄISCHE PATENTSCHRIFT**

(45) Veröffentlichungstag und Bekanntmachung des Hinweises auf die Patenterteilung:
**25.04.2018 Patentblatt 2018/17**

(21) Anmeldenummer: **09799309.1**

(22) Anmeldetag: **11.12.2009**

(51) Int Cl.:
***G01P 15/125*** (2006.01)

(86) Internationale Anmeldenummer:
**PCT/EP2009/066900**

(87) Internationale Veröffentlichungsnummer:
**WO 2010/088995 (12.08.2010 Gazette 2010/32)**

(54) **BESCHLEUNIGUNGSSENSOR UND VERFAHREN ZUM BETREIBEN EINES BESCHLEUNIGUNGSSENSORS**

ACCELERATION SENSOR AND METHOD FOR OPERATING AN ACCELERATION SENSOR

CAPTEUR D'ACCÉLÉRATION ET PROCÉDÉ POUR FAIRE FONCTIONNER UN CAPTEUR D'ACCÉLÉRATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **04.02.2009 DE 102009000594**

(43) Veröffentlichungstag der Anmeldung:
**14.12.2011 Patentblatt 2011/50**

(73) Patentinhaber: **Robert Bosch GmbH 70442 Stuttgart (DE)**

(72) Erfinder:
• **REINMUTH, Jochen 72766 Reutlingen (DE)**
• **EMMERICH, Harald 72127 Kusterdingen (DE)**

(56) Entgegenhaltungen:
WO-A1-2007/125961   US-A1- 2004 221 650
US-A1- 2007 000 323   US-A1- 2008 158 370
US-A1- 2008 173 959   US-A1- 2008 314 147

**Beschreibung**

Die Erfindung betrifft einen Beschleunigungssensor und ein Verfahren zum Betreiben eines Beschleunigungssensors gemäß den Oberbegriffen der Ansprüche 1 und 10, wie aus der EP 0 773 443 A1 bekannt.

Stand der Technik

Ein herkömmlicher Beschleunigungssensor ist häufig als kapazitiver Beschleunigungssensor ausgebildet. Die seismische Masse des kapazitiven Beschleunigungssensors kann als antisymmetrische Wippe ausgebildet sein. Ein mikromechanischer Beschleunigungssensor mit einer als antisymmetrische Wippe ausgebildeten seismischen Masse ist beispielsweise in der EP 0 773 443 A1 beschrieben.

Als Wippen ausgebildete seismische Massen werden auch für Sensoren zur Bestimmung eines Kippwinkels eines Fahrzeugs verwendet. Ein derartiger Sensor zur Bestimmung eines Kippwinkels eines Fahrzeugs ist beispielsweise in der EP 0 244 581 A1 beschrieben.

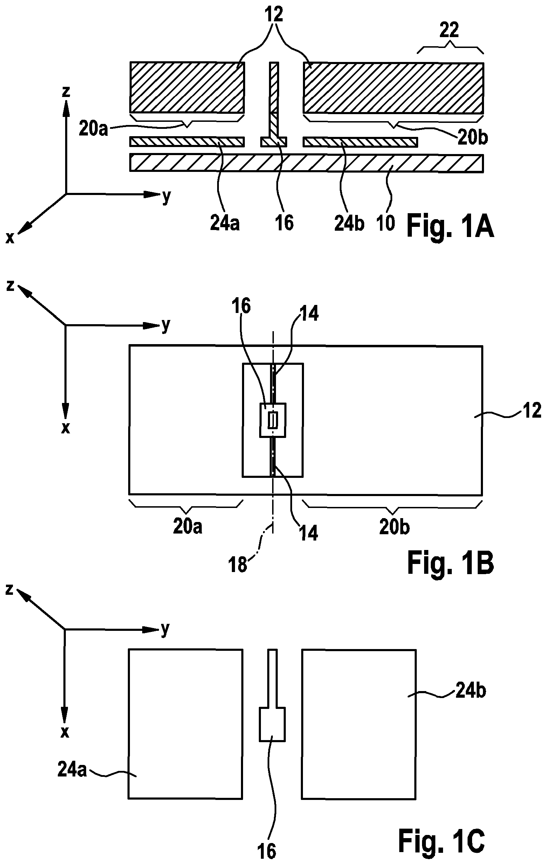

Fig. 1A bis 1C zeigen einen Querschnitt und zwei Draufsichten zum Darstellen eines herkömmlichen Beschleunigungssensors.

Der in Fig. 1A im Querschnitt dargestellte kapazitive Beschleunigungssensor ist dazu ausgelegt, eine senkrecht zu einem Wafer 10 (z-Richtung) ausgerichtet Beschleunigung des Beschleunigungssensors zu erkennen und eine der Beschleunigung entsprechende Größe festzulegen. Dazu ist über dem Wafer 10 eine als antisymmetrische Wippe ausgebildete seismische Masse 12 verstellbar angeordnet. Die seismische Masse 12 ist über zwei Torsionsfedern 14 (siehe Fig. 1B) mit einer Verankerung 16 verbunden, welche fest auf dem Wafer 10 angeordnet ist. Die in Fig. 1A nicht dargestellten Torsionsfedern 14 erstrecken sich entlang einer Längsachse 18, um welche die als Wippe ausgebildete seismische Masse 12 verstellbar ist.

Die seismische Masse 12 umfasst eine auf einer ersten Seite der Längsachse 18 angeordnete erste Elektrode 20a und eine auf der zweiten Seite der Längsachse 18 angeordnete zweite Elektrode 20b. Aufgrund einer Zusatzmasse 22 kann die zweite Elektrode 20b eine größere Masse als die erste Elektrode 20a aufweisen.

Gegenelektroden 24a und 24b zu den Elektroden 20a und 20b der seismischen Masse 12 sind fest an dem Wafer 10 angebracht. Das Sensorprinzip des Beschleunigungssensors basiert somit auf einem Feder-Masse-System, in welchem die bewegliche seismische Masse 12 mit den auf dem Wafer 10 fixierten Gegenelektroden 24a und 24b zwei Plattenkondensatoren bildet. Dabei sind die in Fig. 1C in Aufsicht dargestellten Gegenelektroden 24a und 24b im Bezug auf die Elektroden 20a und 20b der seismischen Masse 12 so angeordnet, dass über ein Auswerten einer ersten Kapazität zwischen der Elektrode 20a und der zugehörigen ersten Gegenelektrode 24a und einer zweiten Kapazität zwischen der Elektrode 20b und der zugehörigen zweiten Gegenelektrode 24b die Stellung der seismischen Masse 12 gegenüber dem Wafer 10 ermittelbar ist.

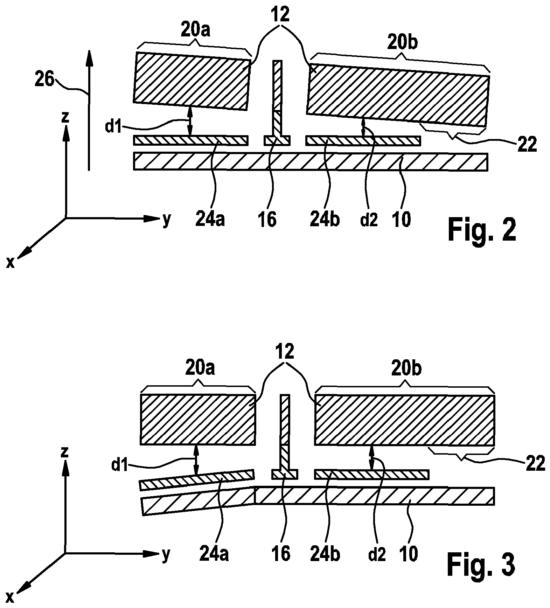

Fig. 2 zeigt einen Querschnitt durch den herkömmlichen Beschleunigungssensor der Fig. 1A bis 1C zum Darstellen seiner Funktionsweise.

Erfährt der Beschleunigungssensor, wie in Fig. 2 gezeigt, eine Beschleunigung 26 in z-Richtung, so wirkt auf die zweite Elektrode 20b aufgrund der Zusatzmasse 22 eine in Richtung des Wafers 10 gerichtete Kraft. Aufgrund der Beschleunigung 26 wird die als Wippe ausgebildete seismische Masse 12 deshalb um die (nicht skizzierte) Längsachse so verstellt, dass ein erster mittlerer Abstand d1 1 zwischen der ersten Elektrode 20a und der ersten Gegenelektrode 24a zunimmt und ein zweiter mittlerer Abstand d2 zwischen der zweiten Elektrode 20b und der zweiten Gegenelektrode 24b abnimmt.

Die Änderungen der Kapazitäten der aus den Elektroden 20a und 20b und den Gegenelektroden 24a und 24b gebildeten beiden Kondensatoren, welche den Änderungen der Abstände d1 und d2 entsprechen, können anschließend zum Festlegen der Beschleunigung 26 ausgewertet werden. Da Verfahren zum Auswerten der Kapazitätsänderungen aus dem Stand der Technik bekannt sind, wird hier nicht weiter darauf eingegangen.

Fig. 3 zeigt einen Querschnitt durch den herkömmlichen Beschleunigungssensor der Fig. 1A bis 1C bei einem auf den Beschleunigungssensor ausgeübten mechanischen Stress.

In Fig. 3 wirkt auf den Wafer 10 ein mechanischer Stress, durch welchen der Wafer 10 entlang der y-Achse asymmetrisch verbogen wird. Durch die asymmetrische Verbiegung des Wafers 10 verändert sich beispielsweise der erste mittlere Abstand d1 zwischen der ersten Elektrode 20a und der ersten Gegenelektrode 24a. Ebenso kann der zweite mittlere Abstand d2 zwischen der zweiten Elektrode 20b und der zweiten Gegenelektrode 24b unter Einfluss von einem mechanischen Stress zu- oder abnehmen.

Somit kann bei dem herkömmlichen Beschleunigungssensor ein mechanischer Stress, welcher beispielsweise über eine Kraft oder über einen Druck auf zumindest ein Teil des Beschleunigungssensors, insbesondere auf eine Untereinheit des Gehäuses, ausgeübt wird, eine Kapazitätsänderung der aus den Elektroden 20a und 20b und den Gegenelektroden 24a und 24b zusammengesetzten Kondensatoren bewirken. In der Regel kann eine (nicht dargestellte) Auswerteeinrichtung des Beschleunigungssensors die durch einen Stresseinfluss bewirkte Kapazitätsänderung nicht von einer durch eine Beschleunigung des Beschleunigungssensors ausgelöste Kapazitätsänderung unterscheiden. Dies hat zur Folge, dass der Beschleunigungssensor einen mechanischen Stress als eine Beschleunigung deutet und eine entsprechende Fehlmeldung ausgibt. Man bezeichnet dies auch als einen durch einen Gehäuseeinfluss verursachten Offset der gemessenen Beschleunigung.

Die US 2008/314147 A1 beschreibt einen Beschleunigungssensor mit einer Z-Sensoreinrichtung aus zwei asymmetrisch ausgebildeten seismischen Massen, welche so an einem Gehäuseteil befestigt sind, dass eine senkrecht zu dem Gehäuseteil ausgerichtete Beschleunigung eine Rotationsbewegung der seismischen Massen um die ihnen zugeordneten Drehachsen in entgegengesetzte Drehrichtungen bewirkt. An dem Gehäuseteil sind Gegenelektroden angeordnet, mit welchen die Drehbewegungen der seismischen Massen erkennbar sein sollen.

Weitere Bespiele für Beschleunigungssensoren sind in der US 2008/0173959 A1 und in der US 2008/0158370 A1 offenbart.

Es ist wünschenswert, eine Möglichkeit zum Betreiben eines Beschleunigungssensors zu haben, bei welcher der Beschleunigungssensor relativ unempfindlich gegenüber einem auf den Beschleunigungssensor ausgeübten mechanischen Stress ist.

Offenbarung der Erfindung

Die Erfindung schafft einen Beschleunigungssensor mit den Merkmalen des Anspruchs 1.

Die vorliegende Erfindung basiert auf der Erkenntnis, dass es möglich ist, eine durch eine Stresseinwirkung auf das Gehäuse bewirkte Änderung der ersten Stellung der ersten seismischem Masse in Bezug auf das Gehäuse als solche zu erkennen, herauszufiltern und/oder zu kompensieren, indem die Sensor- und Auswerteeinrichtung dazu ausgelegt wird, die Information bezüglich korrespondierender Drehbewegungen der ersten seismischen Masse und der zweiten seismischen Masse in Bezug auf das Gehäuse zu ermitteln und eine Beschleunigungs-Information bezüglich einer Beschleunigung des Beschleunigungssensors unter Berücksichtigung der ermittelten Information festzulegen. Eine Beschleunigung des Beschleunigungssensors bewirkt korrespondierende Drehbewegungen der beiden seismischen Massen um die Torsionsachse ihrer Federn. Beispielsweise sind die Richtungen der Asymmetrien der beiden seismischen Massen so festgelegt, dass bei einer Beschleunigung des Beschleunigungssensors die erste seismische Masse in eine erste Drehrichtung und die zweite seismische Masse in eine von der ersten Drehrichtung abweichende zweite Drehrichtung verstellt werden. Die Stellung der ersten seismischen Masse in Bezug auf die zweite seismische Masse ändert sich dabei. Die zweite Drehrichtung kann vorzugsweise entgegen der ersten Drehrichtung ausgerichtet sein. Demgegenüber sind auf Stresseinflüsse zurückzuführende Änderungen der Stellungen der beiden seismischen Massen unregelmäßig, wobei sich insbesondere die Stellung der ersten seismischen Masse in Bezug auf die zweite seismische Masse nicht ändert. Somit ist die Sensor- und Auswerteeinrichtung in der Lage, nicht-beschleunigungsbedingte Änderungen als solche zu erkennen, herauszufiltern und/oder zu kompensieren.

Ein Verbiegen des Gehäuses bewirkt beispielsweise eine Änderung von mindestens einer Stellung einer der beiden seismischen Massen in Bezug auf das Gehäuse. Da die Sensor- und Auswerteeinrichtung jedoch nicht ausschließlich dazu ausgelegt ist, die Beschleunigungs-Information anhand einer Stellungsänderung der einzigen seismischen Masse festzulegen, ist sie auch nicht für die Fehler anfällig, welcher bei einer herkömmlichen Auslegung der Sensor- und Auswerteeinrichtung und einer Ausstattung des Beschleunigungssensors mit nur einer seismischen Masse auftreten.

In einer möglichen Ausführungsform vergleicht die Sensor- und Auswerteeinrichtung eine Änderung der ersten Stellung der ersten seismischen Masse mit einer möglicherweise gleichzeitig auftretenden Änderung der zweiten Stellung der zweiten seismischen Masse. Wie nachfolgend noch genauer ausgeführt wird, ist die Funktionsweise der Sensor- und Auswerteeinrichtung jedoch nicht auf diese Ausführungsform beschränkt.

Die vorliegende Erfindung ermöglicht somit einen Beschleunigungssensor, der deutlich unempfindlicher gegenüber einem mechanischen Stress ist. Damit ist es möglich, für den Beschleunigungssensor einen kostengünstigen Gehäusetyp zu verwenden, auch wenn der kostengünstige Gehäusetyp selbst empfindlicher auf den mechanischen Stress reagiert, da der Beschleunigungssensor auch bei einem Verformen des Gehäuses seine Funktion verlässlich ausführt. Beispielsweise ist somit die Verwendung eines Moldgehäuses anstelle eines Premoldgehäuses für einen Beschleunigungssensor möglich.

Zusätzlich ermöglicht die vorliegende Erfindung ein Kompensieren von Oberflächenladungseffekten, welche aufgrund der unterschiedlichen Potenziale der verschiedenen Materialen von Gehäusekomponenten, Elektroden und/oder einer Wippe auftreten können. Auf diese Weise ist gewährleistet, dass die Oberflächenladungseffekte nicht zu einem Verfälschen der festegelegten Beschleunigungs-Information bezüglich der Beschleunigung des Beschleunigungssensors beitragen können, wie dies herkömmlicherweise oft der Fall ist.

Außerdem umfasst die erste seismische Masse eine auf der ersten Seite der Torsionsachse der ersten Feder angeordnete erste Elektrode und eine auf der zweiten Seite der Torsionsachse der ersten Feder angeordnete zweite Elektrode und die zweite seismische Masse umfasst eine auf der ersten Seite der Torsionsachse der zweiten Feder angeordnete dritte Elektrode und eine auf der zweiten Seite der Torsionsachse der zweiten Feder angeordnete vierte Elektrode, wobei die Sensor- und Auswerteeinrichtung vier Gegenelektroden, welche in Bezug auf das Gehäuse fest angeordnet sind, umfasst. Die Sensor- und Auswerteeinrichtung lässt sich somit auf einfache Weise mittels Standardverfahren kostengünstig herstellen.

Die Sensor- und Auswerteeinrichtung ist so ausgebildet, dass eine erste Kapazität zwischen der ersten Elektrode und einer zugehörigen ersten Gegenelektrode der vier Gegenelektroden und eine vierte Kapazität zwischen der vierten Elektrode und einer zugehörigen vierten Gegenelektrode der vier Gegenelektroden zum Bilden einer ersten Summe miteinander verschaltet sind, und eine zweite Kapazität zwischen der zweiten Elektrode und einer zugehörigen zweiten Gegenelektrode der vier Gegenelektroden und eine dritte Kapazität zwischen der dritten Elektrode und einer zugehörigen dritten Gegenelektrode der vier Gegenelektroden zum Bilden einer zweiten Summe miteinander verschaltet sind. Des Weiteren ist die Sensor- und Auswerteeinrichtung zusätzlich dazu ausgebildet, eine Differenz zwischen der ersten Summe und der zweiten Summe zu ermitteln und die Beschleunigungs-Information bezüglich der Beschleunigung des Beschleunigungssensors anhand der ermittelten Differenz festzulegen. Auf diese Weise lassen sich durch Stresseinflüsse bewirkte Änderungen der ersten Stellung und/oder der zweiten Stellung verlässlich und mit einem geringen Arbeitsaufwand herauskompensieren.

Die Torsionsachse der ersten Feder liegt auf der Torsionsachse der zweiten Feder. Der Beschleunigungssensor weist somit einen sehr symmetrischen Aufbau auf. Oberflächenladungseffekte zwischen einem Substrat, den Elektroden und den zwei antisymmetrischen Wippen haben bei dieser Symmetrisierung nahezu keinen Einfluss mehr auf das Sensorverhalten.

In einer vorteilhaften Ausführungsform unterteilt die Torsionsachse der ersten Feder die erste seismische Masse in eine erste Teilmasse auf einer ersten Seite der Torsionsachse der ersten Feder und in eine zweite Teilmasse auf einer zweiten Seite der Torsionsachse der ersten Feder, welche leichter als die erste Teilmasse ist, wobei die Torsionsachse der zweiten Feder die zweite seismische Masse in eine dritte Teilmasse auf einer ersten Seite der Torsionsachse der zweiten Feder und in eine vierte Teilmasse auf einer zweiten Seite der Torsionsachse der zweiten Feder, welche schwerer als die dritte Teilmasse ist, unterteilt. Die Zusatzmasse der ersten Teilmasse in Bezug auf die zweite Teilmasse und/der die Zusatzmasse der vierten Teilmasse in Bezug auf die dritte Teilmasse ist beispielsweise durch ein größeres Herausstrukturieren der ersten Teilmasse und/oder der vierten Teilmasse aus einer mikromechanischen Funktionsschicht und/oder durch eine zusätzliche Beschichtung der ersten Teilmasse und/oder der vierten Teilmasse realisierbar. Somit ist es möglich, den Beschleunigungssensor mit der ersten antisymmetrischen Wippe und der zweiten antisymmetrischen Wippe kostengünstig herzustellen.

In einer vorteilhaften Weiterbildung sind die erste seismische Masse und die zweite seismische Masse so ausgebildet und in mindestens einer Stellung so zueinander angeordnet, dass die gesamte zweite Teilmasse der ersten seismischen Masse in einen von der zweiten seismischen Masse aufgespannten Zwischenraum hineinragt. Bei dem Beschleunigungssensor sind die beiden als asymmetrische Wippen ausgebildeten seismischen Massen in diesem Fall so ineinander verschränkt, dass eine asymmetrische Verbiegung des Substrats verlässlich kompensierbar ist. Besonders vorteilhaft ist es dabei, wenn die Elektroden zusätzlich auf die oben beschriebene Weise miteinander verschaltet sind.

Beispielsweise umfasst die erste seismische Masse einen ersten kammförmigen Abschnitt mit mindestens einen Zinken und die zweite seismische Masse umfasst einen zweiten kammförmigen Abschnitt mit mindestens zwei Zinken, wobei die erste seismische Masse in mindestens einer Stellung so zu der zweiten seismischen Masse angeordnet ist, dass der mindestens eine Zinken des ersten kammförmigen Abschnitts in den mindestens einen Zwischenraum der mindestens zwei Zinken des zweiten kammförmigen Abschnitts hineinragt. Die hier beschriebene Ausbildung der beiden seismischen Massen weist einen sehr symmetrischen Aufbau auf. Dies ist zusätzlich von Vorteil bezüglich der oben schon beschriebenen Oberflächenladungseffekte.

Des Weiteren kann die erste seismische Masse mindestens einen dritten kammförmigen Abschnitt und die zweite seismische Masse mindestens einen vierten kammförmigen Abschnitt umfassen. Eine derartige Ausbildung der seismischen Massen bewirkt eine zusätzliche Reduzierung der Auswirkungen von asymmetrischen Verformungen des Gehäuses.

Kurze Beschreibung der Zeichnungen

Weitere Merkmale und Vorteile der vorliegenden Erfindung werden nachfolgend anhand der Figuren erläutert. Es zeigen:

Fig. 1A bis 1C      einen Querschnitt und zwei Draufsichten zum Darstellen eines herkömmlichen Beschleunigungssensors;

Fig. 2      einen Querschnitt durch den herkömmlichen Beschleunigungssensor der Fig. 1A bis 1C zum Darstellen seiner Funktionsweise;

Fig. 3       einen Querschnitt durch den herkömmlichen Beschleunigungssensor der Fig. 1A bis 1C bei einem auf den Beschleunigungssensor ausgeübten mechanischen Stress;

Fig. 4A bis 4C       einen Querschnitt und zwei Draufsichten zum Darstellen einer ersten Ausführungsform des Beschleunigungssensors;

Fig. 5       einen Querschnitt durch den Beschleunigungssensor der Fig. 4A bis 4C zum Darstellen seiner Funktionsweise;

Fig. 6       einen Querschnitt durch den Beschleunigungssensor der Fig. 4A bis 4C bei einem auf den Beschleunigungssensor ausgeübten mechanischen Stress; und

Fig. 7A und 7B       Draufsichten zum Darstellen einer zweiten Ausführungsform des Beschleunigungssensors.

Ausführungsformen der Erfindung

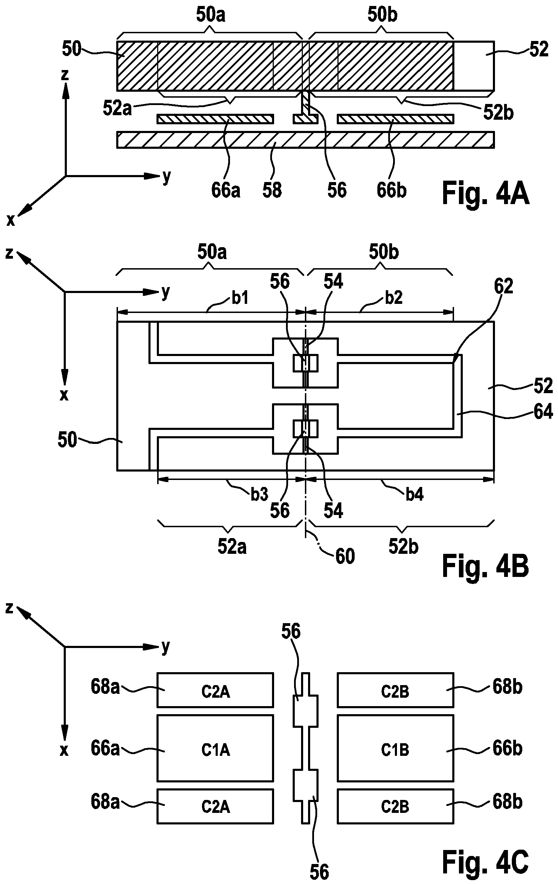

Fig. 4A bis 4C zeigen einen Querschnitt und zwei Draufsichten zum Darstellen einer ersten Ausführungsform des Beschleunigungssensors.

Der schematisch wiedergegebene Beschleunigungssensor weist eine erste seismische Masse 50 und eine zweite seismische Masse 52 auf. Die erste seismische Masse 50 ist über mindestens eine Feder 54 (siehe Fig. 4B) mit mindestens einer Verankerung 56, welche fest auf einem Grundsubstrat 58 angeordnet ist, verbunden. Entsprechend verbindet mindestens eine weitere Feder 54 die zweite seismische Masse 52 mit mindestens einer an dem Grundsubstrat 58 befestigten Verankerung 56. Die beiden seismischen Massen 50 und 52 können auch über mindestens zwei Federn 54 mit mindestens einer gemeinsamen Verankerung 56 verbunden sein.

Die mindestens zwei Federn 54 sind als Torsionsfedern ausgebildet. Die Federn 54 verlaufen entlang einer gemeinsamen Längsachse, welche im Weiteren als Drehachse 60 bezeichnet wird.

Die beiden seismischen Massen 50 und 52 sind so in dem Beschleunigungssensor angeordnet, dass sie, sofern der Beschleunigungssensor keine Beschleunigung erfährt, in Bezug auf das Grundsubstrat 58 in ihren Ausgangsstellungen vorliegen. Beispielsweise sind die beiden seismischen Massen 50 und 52 in ihrer Ausgangsstellungen parallel zueinander angeordnet. Insbesondere können die beiden seismischen Massen 50 und 52 in ihren Ausgangsstellungen in einer gemeinsamen Ebene liegen, welche vorteilhafterweise parallel zu dem Grundsubstrat 58 ausgerichtet ist. Dies erleichtert die Herstellung des Beschleunigungssensors, da in diesem Falle die seismischen Massen 50 und 52 in ihren Ausgangsstellungen aus einer mikromechanischen Funktionsschicht, vorteilhafterweise zusammen mit den Federn 54, heraus strukturierbar sind. Eine Justage der seismischen Massen 50 und 52 ist somit nicht notwendig.

Die Drehachse 60 unterteilt die erste seismische Masse 50 in eine erste Teilmasse 50a und in eine zweite Teilmasse 50b, wobei die auf einer ersten Seite der Drehachse 60 angeordnete erste Teilmasse 50a eine größere Masse als die auf einer zweiten Seite der Drehachse 60 angeordnete zweite Teilmasse 50b hat. Die erste seismische Masse 50 ist aufgrund der unterschiedlichen Massen der beiden Teilmassen 50a und 50b als antisymmetrische Wippe ausgebildet, welche in Bezug auf das Grundsubstrat 58 um die Drehachse 60 verstellbar angeordnet ist.

Auch die zweite seismische Masse 52 ist als antisymmetrische Wippe ausgebildet, wobei die Drehachse 60 die zweite seismische Masse 52 in eine dritte Teilmasse 52a und eine vierte Teilmasse 52b unterteilt. Die auf der ersten Seite der Drehachse 60 angeordnete dritte Teilmasse 52a weist eine kleinere Masse auf als die auf der zweiten Seite der Drehachse 60 angeordnete zweite Teilmasse 52b. Unter einer "Wippbewegung" der zweiten seismischen Masse 52 ist ein Drehen der zweiten seismischen Masse 52 um die Drehachse 60 zu verstehen.

Die Zusatzmasse der ersten Teilmasse 50a in Bezug auf die zweite Teilmasse 50b und/oder die Zusatzmasse der vierten Teilmasse 52b in Bezug auf die dritte Teilmasse 52a ist beispielsweise durch ein größeres Herausstrukturieren der ersten Teilmasse 50a und/oder der vierten Teilmasse 52b aus einer mikromechanischen Funktionsschicht festgelegt. Als Alternative oder als Ergänzung dazu ist die ungleiche Masseverteilung auch über eine zusätzliche Beschichtung der ersten Teilmasse 50a und/oder der vierten Teilmasse 52b realisierbar.

Die Teilmassen 50a, 50b, 52a und 52b sind zumindest teilweise als Elektroden ausgebildet. Der besseren Übersichtlichkeit wegen sind die als Elektroden fungierenden Bereiche der Teilmassen 50a, 50b, 52a und 52b in Fig. 1A bis 1C jedoch nicht markiert.

Vorzugsweise ist die Fläche einer ersten Elektrode der ersten Teilmasse 50a gleich einer Fläche einer zweiten Elektrode der zweiten Teilmasse 50b. Entsprechend kann auch die zweite seismische Masse 52 so ausgebildet sein, dass eine Fläche einer dritten Elektrode der dritten Teilmasse 52a gleich einer Fläche einer vierten Elektrode der vierten Teilmasse 52b ist. Als Ergänzung dazu kann die Fläche der dritten Elektrode gleich der Fläche der ersten Elektrode sein. Auf die Vorteile einer gleichflächigen Ausbildung der vier Elektroden wird unten noch genauer eingegangen.

Mindestens eine der seismischen Massen 50 oder 52 kann zusätzlich so ausgebildet sein, dass sich mindestens eine ihrer Elektroden aus mindestens zwei getrennt voneinander angeordneten Elektrodenbereichen zusammensetzt. Beispielsweise umfassen die dritte und die vierte Elektrode je zwei voneinander getrennt angeordnete Elektrodenbereiche. Unter der Fläche der Elektrode wird in diesem Fall die Summe der Flächen der mindestens zwei Elektrodenbereiche verstanden.

Bei der hier beschriebenen Ausführungsform des Beschleunigungssensors sind die beiden seismischen Massen 50 und 52 als zwei ineinander verschränkte Wippen ausgebildet. Unter zwei ineinander verschränkten Wippen wird beispielsweise verstanden, dass die beiden seismischen Massen 50 und 52 so ausgebildet und in mindestens einer Stellung so zueinander angeordnet sind, dass zumindest ein von der Drehachse 60 weggerichteter Endabschnitt 62 der zweiten Teilmasse 50b der ersten seismischen Masse 50 in mindestens einem Zwischenraum 64, welcher von der vierten Teilmasse 52b der zweiten seismischen Masse 52 aufgespannt wird, hineinragt. Die mindestens eine Stellung der beiden seismischen Massen 50 und 52 ist vorzugsweise die Ausgangsstellung der beiden seismischen Massen 50 und 52.

Beispielsweise weist die erste Teilmasse 50a eine maximale Breite b1 auf, welche größer als eine maximale Breite b3 der dritten Teilmasse 52a ist, wobei die beiden Breiten b1 und b3 senkrecht zu der Drehachse 60 ausgerichtet sind. Entsprechend kann die vierte Teilmasse 52b eine senkrecht zu der Drehachse 60 verlaufende maximale Breite b4 haben, welche größer als die maximale Breite b2 der zweiten Teilmasse 50b senkrecht zu der Drehachse 60 ist.

Bei der hier beschriebenen Ausführungsform ragt die gesamte zweite Teilmasse 50b der ersten seismischen Masse 50 in den von der vierten Teilmasse 52b der zweiten seismischen Masse 52 aufgespannten Zwischenraum 64 hinein. Die Seitenflächen der zweiten Teilmasse 50b der ersten seismischen Masse 50 sind somit in mindestens einer Stellung zweidimensional von den Innenflächen der vierten Teilmasse 52b der zweiten seismischen Masse 52, welche den Zwischenraum 64 aufspannen, und der Drehachse 60 umrahmt.

Man kann die Ausbildung der beiden seismischen Massen 50 und 52 auch so beschreiben, dass die erste seismische Masse 50 kammförmig mit einem Zinken und die zweite seismische Masse 52 kammförmig mit zwei Zinken ausgebildet sind. Die erste seismische Masse 50 setzt sich zusammen aus einem parallel zu der x-Achse verlaufenden Verbindungsteil und dem in y-Richtung ausgerichteten Zinken. Entsprechend umfasst die zweite seismische Masse 52 ein entlang der x-Achse gerichtetes Verbindungsteil und die beiden senkrecht zu dem Verbindungsteil verlaufenden Zinken. Der Zinken der ersten seismischen Masse 50 ragt in mindestens einer Stellung der beiden seismischen Massen 50 und 52 in einen Zwischenraum der mindestens zwei Zinken der zweiten seismischen Masse 52 hinein.

Es wird hier darauf hingewiesen, dass die Ausbildungsform der Fig. 4B auch modifizierbar ist, indem die erste seismische Masse 50 mindestens zwei Zinken und die zweite seismische Masse 52 zwei oder mehr Zinken aufweist. Dabei können auch mehrere Zinken der ersten seismischen Masse 50 in mindestens einer Stellung in mindestens zwei Zwischenräume zwischen den Zinken der zweiten seismischen Masse 52 hineinragen. Die Anzahl der Federn 54 und der Verankerungen 56 ist in diesem Fall entsprechend angepasst. Auf die Vorteile einer derartigen Modifizierung wird unten noch eingegangen.

Fig. 4C zeigt eine Draufsicht auf die fest an dem Grundsubstrat 58 angeordneten Gegenelektroden 66a, 66b, 68a und 68b der vier Elektroden der beiden seismischen Massen 50 und 52. Die erste Gegenelektrode 66a und die erste Elektrode der ersten seismischen Masse 50 bilden einen ersten Kondensator mit der Kapazität C1A. Entsprechend wirkt die zweite Gegenelektrode 66b mit der zweiten Elektrode der ersten seismischen Masse 50 als zweiter Kondensator mit der Kapazität C1B zusammen. Die dritte Elektrode der zweiten seismischen Masse 52 und die dritte Gegenelektrode 68a bilden einen dritten Kondensator mit der Kapazität C2A. Des Weiteren umfasst der Beschleunigungssensor einen vierten Kondensator aus der vierten Elektrode der zweiten seismischen Masse 52 und der vierten Gegenelektrode 68b mit der Kapazität C2B.

Vorzugsweise entspricht die Anordnung der Gegenelektroden 66a, 66b, 68a und 68b der Anordnung der vier Elektroden der beiden seismischen Massen 50 und 52. Die dritte Gegenelektrode 68a umfasst zwei getrennte Elektrodenflächen, zwischen welchen die erste Gegenelektrode 66a liegt. Entsprechend ist auch die vierte Gegenelektrode 68b in zwei getrennte Elektrodenflächen unterteilt, zwischen welchen die zweite Gegenelektrode 66b liegt. Es ist vorteilhaft, die Gegenelektroden 66a, 66b, 68a und 68b mit gleichgroßen Gesamtflächen auszubilden, wie weiter unten noch genauer ausgeführt wird.

Wie oben bereits erläutert, können die erste seismische Masse 50 auch als Kamm mit mindestens zwei Zinken und die zweite seismische Masse 52 als Kamm mit zwei oder mehr Zinken ausgebildet werden. In diesem Fall können die Gegenelektroden 66a, 66b, 68a und 68b entsprechend an die Ausbildung und die Anordnung der vier Elektroden angepasst werden.

Vorteilhafterweise sind die Kondensatoren mit den Kapazitäten C1A und C2B so miteinander verschaltet, dass eine erste Summe C1A + C2B der Kapazitäten C1A und C2B berechnet wird. Entsprechend können auch die Kondensatoren mit den Kapazitäten C1B und C2A so miteinander verschaltet werden, dass eine zweite Summe C1B + C2A der Kapazitäten C1B und C2A berechenbar ist. Des Weiteren ist es vorteilhaft, die Elektronik des Beschleunigungssensors so auszulegen, dass eine Differenz $\Delta_{ges}$ aus der ersten Summe C1A + C2B und der zweiten Summe C1B + C2A ermittelt wird, mit

$$\text{(Gl. 1)} \quad \Delta_{ges} = (C1A + C2B) - (C1B + C2A)$$

Die Beschleunigung, welche der Beschleunigungssensor erfährt, kann in diesem Fall von einer Auswerteeinrichtung anhand der Differenz $\Delta_{ges}$ festgelegt werden. Da Möglichkeiten zum Festlegen der Beschleunigung unter Berücksichtigung der Differenz $\Delta_{ges}$ aus dem Stand der Technik bekannt sind, wird hier nicht weiter darauf eingegangen.

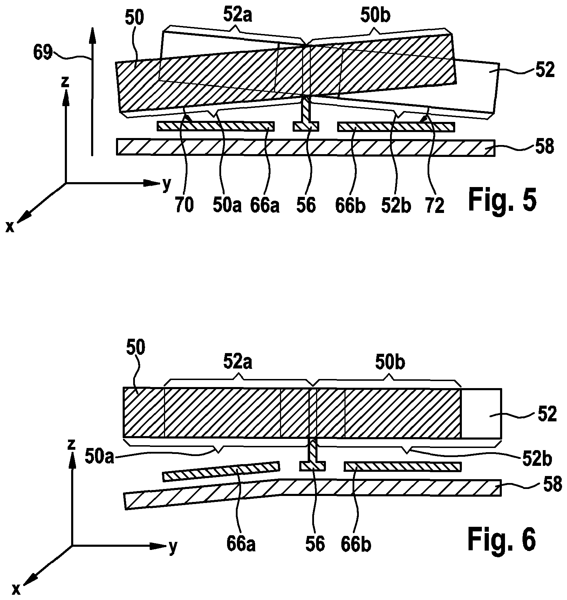

Fig. 5 zeigt einen Querschnitt durch den Beschleunigungssensor der Fig. 4A bis 4C zum Darstellen seiner Funktionsweise.

Erfährt der Beschleunigungssensor eine Beschleunigung mit einer Beschleunigungskomponente 69, welche senkrecht zu dem Grundsubstrat 58 und in eine von dem Grundsubstrat 58 zu den beiden seismischen Massen 50 und 52 gerichtete Richtung (in positive z-Richtung) verläuft, so werden die beiden als Wippen ausgebildeten seismischen Massen 50 und 52 aufgrund ihrer zueinander entgegen gesetzten, asymmetrischen Massenverteilungen in entgegen gerichtete Drehrichtungen 70 und 72 aus ihren Ausgangsstellungen um die (nicht skizzierte) Drehachse bewegt. Das heißt, dass bei einer derartigen Beschleunigungskomponente 69 die schwereren Teilmassen 50a und 52b, welche auf verschiedenen Seiten der Drehachse liegen, sich dem Grundsubstrat 58 annähern. Die leichteren Teilmassen 50b und 52a bewegen sich von dem Grundsubstrat 58 weg. Die beiden seismischen Massen 50 und 52 führen somit korrespondierende Drehbewegungen aus.

Die in dem oberen Absatz beschriebene Funktionsweise des Beschleunigungssensors ist selbstverständlich auch gewährleistet, wenn die beiden seismischen Massen 50 und 52 um verschiedene Drehachsen beweglich gelagert sind.

Die Drehbewegungen der beiden seismischen Massen 50 und 52 in die entgegen gerichteten Drehrichtungen 70 und 72 bewirken Änderungen an dem Signal $\Delta_{ges}$ der Kapazitäten C1A, C1 B, C2A und C2B der vier Kondensatoren des Beschleunigungssensors. Somit lässt sich anhand des Signals $\Delta_{ges}$ ein der Beschleunigungskomponente 69 entsprechender Wert festlegen.

Auf ähnliche Weise bewirkt eine Beschleunigungskomponente, welche senkrecht zu dem Grundsubstrat 58 und in eine von den beiden seismischen Massen 50 und 52 zu dem Grundsubstrat 58 gerichtete Richtung (in negative z-Richtung) verläuft, eine Änderung des Signals $\Delta_{ges}$. Somit kann der hier beschriebene Beschleunigungssensor auch für eine Beschleunigungskomponente in die negative z-Richtung eine Größe festlegen.

Fig. 6 zeigt einen Querschnitt durch den Beschleunigungssensor der Fig. 4A bis 4C bei einem auf den Beschleunigungssensor ausgeübten mechanischen Stress.

In Fig. 6 wirkt auf den Beschleunigungssensor ein mechanischer Stress, durch welchen das Grundsubstrat 58 entlang der y-Achse asymmetrisch verbogen wird. Durch die asymmetrische Verbiegung des Grundsubstrats 58 entlang der y-Achse verändern sich beispielsweise die Abstände zwischen der ersten Elektrode und der ersten Gegenelektrode 66a, sowie der dritten Elektroden und der dritten Gegenelektrode 68a. Entsprechend bewirkt die asymmetrische Verbiegung des Grundsubstrats 58 eine Änderung der Kapazitäten C1A und C2A.

Insbesondere bei einer Flächengleichheit der ersten Elektrode und der dritten Elektrode, sowie der ersten Gegenelektrode 66a und der dritten Gegenelektrode 68a, ist gewährleistet, dass sich die Kapazitäten C1A und C2A jeweils um eine gleiche Differenzkapazität $\Delta_C$ ändern. Die Kapazitäten C1A und C2A des ersten und des dritten Kondensators setzen sich somit aus einer stresslosen Ausgangskapazität C1A0 oder C2A0 vor dem Auftreten des mechanischer Stress und der Differenzkapazität $\Delta_C$ zusammen mit:

$$\text{(Gl. 2)} \quad C1A = C1A0 + \Delta_C$$

und

$$\text{(Gl. 3)} \quad C2A = C2A0 + \Delta_C$$

Die entsprechend der oben beschriebenen Vorgehensweise berechnete erste Summe C1A + C2B und zweite Summe C1 B + C2A ändern sich ebenfalls um die Differenzkapazität $\Delta_C$ mit:

$$\text{(Gl. 4)} \quad C1A + C2B = C1A0 + \Delta_C + C2B0$$

und

$$(Gl.\ 5) \quad C1B + C2A = C1B0 + C2A0 + \Delta_C .$$

Bei der Berechnung der Differenz $\Delta_{ges}$ hebt sich die Differenzkapazität $\Delta_C$ jedoch wieder heraus.

$$(Gl.\ 6) \quad \Delta_{ges} = (C1A + C2B) - (C1B + C2A) = (C1A0 + C2B0) - (C1B0 + C2A0)$$

Die Verbiegung des Grundsubstrats 58 entlang der y-Achse bewirkt somit keine Änderung der Differenz $\Delta_{ges}$. Auf diese Weise ist gewährleistet, dass die asymmetrische Verbiegung des Grundsubstrats 58 entlang der y-Achse keinen Einfluss auf eine von dem Beschleunigungssensor ermittelte Beschleunigungskomponente in z-Richtung hat.

Da die asymmetrische Verbiegung des Grundsubstrats 58 nicht zu korrespondierenden Drehbewegungen der beiden seismischen Massen 50 und 52 führt, bewirkt sie somit auch keine Änderung der Differenz $\Delta_{ges}$. Es ist somit unterbunden, dass aufgrund der asymmetrischen Verbiegung des Grundsubstrats 58 eine nicht auftretende Beschleunigung des Beschleunigungssensors als falscher Messwert ausgegeben wird.

In dem Ausführungsbeispiel der Fig. 4C ist eine Segmentierung der Gegenelektroden 66a, 66b, 68a und 68b (sowie der Elektroden) in x-Richtung ausgeführt. Auf diese Weise können asymmetrische Verbiegungen des Grundsubstrats 58 entlang der y-Achse, wie oben beschrieben, vollständig kompensiert werden. Asymmetrische Verbiegungen entlang der x-Achse werden durch die dreifache Segmentierung in X-Richtung ebenfalls in ihren Auswirkungen stark begrenzt.

Vorteilhafterweise ist die Aufhängung der Federn 54 für beide Wippen symmetrisch ausgebildet, um ein verlässliches Kompensieren einer Substratverbiegung zu verbessern. Weiterhin können die Federn 54 bezüglich ihrer Ankopplung an die mindestens eine Verankerung 56 analog ausgebildet werden. Dies verbessert zusätzlich das Kompensieren einer Substratverbiegung.

Anhand der folgenden Figuren wird erläutert, wie über eine erhöhte Segmentierung auch Auswirkungen einer asymmetrischen Verbiegung entlang der x-Achse weiter begrenzbar sind. Als Beispiel für eine erhöhte Segmentierung ist oben bereits der Beschleunigungssensor mit einer als Kamm mit mindestens zwei Zinken ausgebildeten ersten seismischen Masse 50 und mit einer als Kamm mit zwei oder mehr Zinken ausgebildeten zweiten seismischen Masse 52 genannt. Ebenso kann es sich je nach Flächenbedarf und Eigenschaften der Wippenaufhängung als vorteilhaft erweisen, anstelle einer Doppelwippe eine Vielfachwippe zu verwenden. Ein Beispiel für eine Vielfachwippe wird anhand der folgenden Absätze beschrieben.

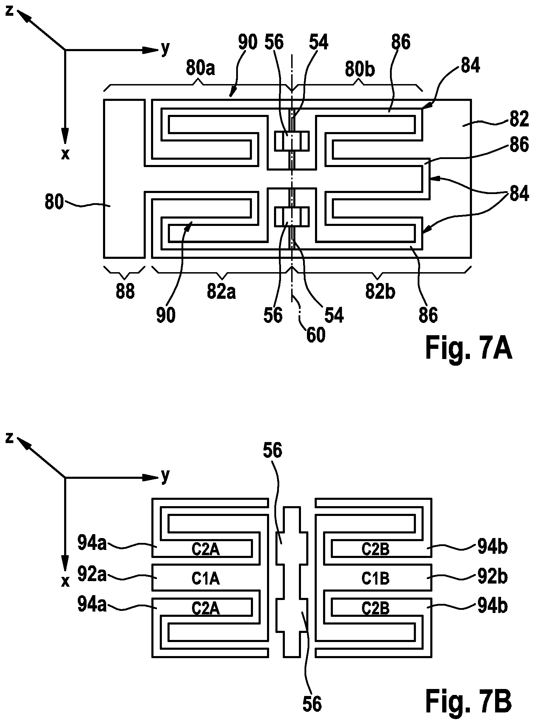

Fig. 7A und 7B zeigen Draufsichten zum Darstellen einer zweiten Ausführungsform des Beschleunigungssensors.

Die beiden seismischen Massen 80 und 82 des in Fig. 7A und 7B schematisch dargestellten Beschleunigungssensors sind über die schon beschriebenen Federn 54 mit den fest an dem (nicht skizzierten) Grundsubstrat befestigten Verankerungen 56 um die Drehachse drehbar gelagert. Die Drehachse unterteilt die erste seismische Masse 80 in eine erste Teilmasse 80a und eine zweite Teilmasse 80b und die zweite seismische Masse 82 in eine dritte Teilmasse 82a und eine vierte Teilmasse 82b. Dabei sind die erste Teilmasse 80a und die dritte Teilmasse 82a auf einer ersten Seite der Drehachse und die zweite Teilmasse 80b und die vierte Teilmasse 82b auf einer zweiten Seite der Drehachse angeordnet.

Bei dem dargestellten Ausführungsbeispiel weist die zweite Teilmasse 80b der ersten seismischen Masse 80 drei von der Drehachse weggerichtete Endabschnitte 84 auf, welche in von der vierten Teilmasse 82b aufgespannte Zwischenräume 86 hineinragen. Insbesondere können die beiden seismischen Massen 80 und 82 so zueinander ausgebildet sein, dass die Seitenflächen der zweiten Teilmasse 80b von den einen Gesamtinnenraum begrenzenden Innenflächen der vierten Teilmasse 82b und der Drehachse umrahmt werden.

Man kann dies auch so bezeichnen, dass die zweite Teilmasse 80b einen ersten kammförmigen Abschnitt mit einem Verbindungsteil und drei Zinken umfasst und die vierte Teilmasse 82b einen zweiten kammförmigen Abschnitt mit einem Verbindungsteil vier Zinken umfasst. Die drei Zinken des ersten kammförmigen Abschnitts, welche parallel zu der y-Achse ausgerichtet sind, ragen in die drei Zwischenräume der vier parallel zu der y-Achse verlaufenden Zinken des zweiten kammförmigen Abschnitts hinein. Die beiden Verbindungsteile sind parallel zu der x-Achse ausgerichtet.

Die erste Teilmasse 80a umfasst ebenfalls einen dritten kammförmigen Abschnitt mit einem Verbindungsteil und drei Zinken, wobei an den mittleren Zinken des dritten kammförmigen Abschnitts eine Zusatzmasse 88 befestigt ist. Die Zusatzmasse 88 und das Verbindungsteil sind parallel zu der x-Achse ausgerichtet, während die drei Zinken entlang der y-Achse verlaufen. Die dritte Teilmasse 82a weist zwei kammförmige Abschnitte 90 mit je einem Verbindungsteil und zwei Zinken auf. Die beiden äußeren Zinken des dritten kammförmigen Abschnitts der ersten Teilmasse 80a ragen jeweils in einen Zwischenraum der beiden Zinken der zwei weiteren kammförmigen Abschnitte 90 der dritten Teilmasse 82a hinein.

Untereinheiten der Teilmassen 80a, 80b, 82a und 82b dienen entsprechend der oben beschriebenen Vorgehensweise als Elektroden. Zusammenwirkende Gegenelektroden 92a, 92b, 94a und 94b sind in Bezug auf das Grundsubstrat fest angeordnet. Die Verschaltung der aus den Elektroden und den 92a, 92b, 94a und 94b zusammengesetzten Kondensatoren entspricht dem oben beschriebenen Beispiel. Da das Zusammenwirken der Kondensatoren zum Ermitteln einer auf dem Beschleunigungssensor wirkenden Beschleunigung damit für einen Fachmann nahegelegt ist, wird hier nicht weiter darauf eingegangen.

Aufgrund der erhöhten Segmentierung der Elektroden und der Gegenelektroden 92a, 92b, 94a und 94b werden die Auswirkungen einer asymmetrischen Verbiegung entlang der x-Achse zusätzlich minimiert. In einer Weiterbildung der hier beschriebenen Ausführungsform kann die Anzahl der Segmentierungen der Elektroden und der Gegenelektroden 92a, 92b, 94a und 94b zusätzlich gesteigert werden.

**Patentansprüche**

1.  Beschleunigungssensor mit:

    einem Gehäuse (58);
    einer ersten seismischen Masse (50,80), welche als erste antisymmetrische Wippe ausgebildet und über mindestens eine erste Feder (54) so in dem Gehäuse (58) angeordnet ist, dass die erste seismische Masse (50,80) in Bezug auf das Gehäuse (58) um eine Torsionsachse (60) der ersten Feder (54) verstellbar ist;
    einer zweiten seismische Masse (52,82), welche als zweite antisymmetrische Wippe ausgebildet und über mindestens eine zweite Feder (54) so in dem Gehäuse (58) angeordnet ist, dass die zweite seismische Masse (52,82) in Bezug auf das Gehäuse (58) um eine Torsionsachse (60) der zweiten Feder (54) verstellbar ist; und
    einer Sensor- und Auswerteeinrichtung (66a,66b,68a,68b,92a,92b,94a,94b), welche dazu ausgelegt ist, eine Information bezüglich korrespondierender Drehbewegungen der ersten seismischen Masse (50,80) und der zweiten seismischen Masse (52,82) in Bezug auf das Gehäuse (58) zu ermitteln und eine Beschleunigungs-Information bezüglich einer Beschleunigung (69) des Beschleunigungssensors unter Berücksichtigung der ermittelten Information festzulegen;
    wobei die erste seismische Masse (50,80) eine auf der ersten Seite der Torsionsachse (60) der ersten Feder (54) angeordnete erste Elektrode und eine auf der zweiten Seite der Torsionsachse (60) der ersten Feder (54) angeordnete zweite Elektrode umfasst und die zweite seismische Masse (52,82) eine auf der ersten Seite der Torsionsachse (60) der zweiten Feder (54) angeordnete dritte Elektrode und eine auf der zweiten Seite der Torsionsachse (60) der zweiten Feder (54) angeordnete vierte Elektrode umfasst,
    wobei die Sensor- und Auswerteeinrichtung (66a,66b,68a,68b,92a,92b,94a,94b) vier Gegenelektroden (66a,66b,68a,68b,92a,92b,94a,94b), welche in Bezug auf das Gehäuse (58) fest angeordnet sind, umfasst, und so ausgebildet ist, dass eine erste Kapazität (C1A) zwischen der ersten Elektrode und einer zugehörigen ersten Gegenelektrode (66a,92a) der vier Gegenelektroden (66a,66b,68a,68b,92a,92b,94a,94b) und eine vierte Kapazität (C2B) zwischen der vierten Elektrode und einer zugehörigen vierten Gegenelektrode (68b,94b) der vier Gegenelektroden (66a,66b,68a,68b,92a,92b,94a,
    94b) zum Bilden einer ersten Summe miteinander verschaltet sind, und eine zweite Kapazität (C1B) zwischen der zweiten Elektrode und einer zugehörigen zweiten Gegenelektrode (66b,92b) der vier Gegenelektroden (66a,66b,68a,68b,92a,92b,94a,94b) und eine dritte Kapazität (C2A) zwischen der dritten Elektrode und einer zugehörigen dritten Gegenelektrode (68a,94a) der vier Gegenelektroden (66a,66b,68a,68b,92a,92b, 94a,94b) zum Bilden einer zweiten Summe miteinander verschaltet sind, um eine Differenz zwischen der ersten Summe und der zweiten Summe zu ermitteln und die Beschleunigungs-Information bezüglich der Beschleunigung (69) des Bes.chleunigungssensors anhand der ermittelten Differenz festzulegen;
    **dadurch gekennzeichnet, dass**
    die Torsionsachse (60) der ersten Feder (54) auf der Torsionsachse (60) der zweiten Feder (54) liegt und eine X-Achse definiert; und
    die dritte Gegenelektrode (68a, 94a) zwei getrennte Elektrodenflächen umfasst, wobei die erste Gegenelektrode (66a, 92a) entlang der X-Achse zwischen den zwei getrennten Elektrodenflächen der dritten Gegenelektrode (68a, 94a) liegt, und die vierte Gegenelektrode (68b, 94b) zwei getrennte Elektrodenflächen umfasst, wobei die zweite Gegenelektrode (66b, 92b) entlang der X-Achse zwischen den zwei getrennten Elektrodenflächen der vierten Gegenelektrode (68b, 94b) liegt.

2.  Beschleunigungssensor nach Anspruch 1, wobei die Torsionsachse (60) der ersten Feder (54) die erste seismische Masse (50,80) in eine erste Teilmasse (50a,80a) auf einer ersten Seite der Torsionsachse (60) der ersten Feder (54) und in eine zweite Teilmasse (50b,80b) auf einer zweiten Seite der Torsionsachse (60) der ersten Feder (54), welche leichter als die erste Teilmasse (50a,80a) ist, unterteilt, und wobei die Torsionsachse (60) der zweiten Feder (54) die zweite seismische Masse (52,82) in eine dritte Teilmasse (52a,82a) auf einer ersten Seite der Torsionsachse (60) der zweiten Feder (54) und in eine vierte Teilmasse (52b,82b) auf einer zweiten Seite der Torsionsachse (60) der zweiten Feder (54), welche schwerer als die dritte Teilmasse (52a,82a) ist, unterteilt.

3. Beschleunigungssensor nach Anspruch 2, wobei die erste seismische Masse (50,80) und die zweite seismische Masse (52,82) so ausgebildet und in mindestens einer Stellung so zueinander angeordnet sind, dass die gesamte zweite Teilmasse (50b) der ersten seismischen Masse (42) in einen von der zweiten seismischen Masse (52,82) aufgespannten Zwischenraum (64,86) hineinragt.

4. Beschleunigungssensor nach Anspruch 3, wobei die erste seismische Masse (50,80) einen ersten kammförmigen Abschnitt mit mindestens einen Zinken umfasst und die zweite seismische Masse (52,82) einen zweiten kammförmigen Abschnitt mit mindestens zwei Zinken umfasst, und wobei die erste seismische Masse (50,80) in mindestens einer Stellung so zu der zweiten seismischen Masse (52,82) angeordnet ist, dass der mindestens eine Zinken des ersten kammförmigen Abschnitts in den mindestens einen Zwischenraum der mindestens zwei Zinken des zweiten kammförmigen Abschnitts hineinragt.

5. Beschleunigungssensor nach Anspruch 4, wobei die erste seismische Masse (80) mindestens einen dritten kammförmigen Abschnitt und die zweite seismische Masse (82) mindestens einen vierten kammförmigen Abschnitt (90) umfassen.

## Claims

1. Acceleration sensor comprising:

   a housing (58);
   a first seismic mass (50, 80), which is in the form of a first antisymmetric rocker and is arranged in the housing (58) by means of at least one first spring (54) in such a way that the first seismic mass (50, 80) is adjustable in relation to the housing (58) about a torsion axis (60) of the first spring (54);
   a second seismic mass (52, 82), which is in the form of a second antisymmetric rocker and is arranged in the housing (58) by means of at least one second spring (54) in such a way that the second seismic mass (52, 82) is adjustable in relation to the housing (58) about a torsion axis (60) of the second spring (54); and
   a sensor and evaluation device (66a, 66b, 68a, 68b, 92a, 92b, 94a, 94b), which is designed to ascertain information with respect to corresponding rotational movements of the first seismic mass (50, 80) and the second seismic mass (52, 82) in relation to the housing (58) and to determine acceleration information with respect to an acceleration (69) of the acceleration sensor, taking into account the information ascertained;
   wherein the first seismic mass (50, 80) comprises a first electrode, arranged on the first side of the torsion axis (60) of the first spring (54), and a second electrode, arranged on the second side of the torsion axis (60) of the first spring (54), and the second seismic mass (52, 82) comprises a third electrode, arranged on the first side of the torsion axis (60) of the second spring (54), and a fourth electrode, arranged on the second side of the torsion axis (60) of the second spring (54),
   wherein the sensor and evaluation device (66a, 66b, 68a, 68b, 92a, 92b, 94a, 94b) comprises four counter-electrodes (66a, 66b, 68a, 68b, 92a, 92b, 94a, 94b), which are fixedly arranged in relation to the housing (58), and is formed such that a first capacitance (C1A) between the first electrode and an associated first counter-electrode (66a, 92a) of the four counter-electrodes (66a, 66b, 68a, 68b, 92a, 92b, 94a, 94b) and a fourth capacitance (C2B) between the fourth electrode and an associated fourth counter-electrode (68b, 94b) of the four counter-electrodes (66a, 66b, 68a, 68b, 92a, 92b, 94a, 94b) are interconnected to form a first sum, and a second capacitance (C1B) between the second electrode and an associated second counter-electrode (66b, 92b) of the four counter-electrodes (66a, 66b, 68a, 68b, 92a, 92b, 94a, 94b) and a third capacitance (C2A) between the third electrode and an associated third counter-electrode (68a, 94a) of the four counter-electrodes (66a, 66b, 68a, 68b, 92a, 92b, 94a, 94b) are interconnected to form a second sum, in order to ascertain a difference between the first sum and the second sum and to determine the acceleration information with respect to the acceleration (69) of the acceleration sensor on the basis of the difference ascertained;
   **characterized in that**
   the torsion axis (60) of the first spring (54) lies on the torsion axis (60) of the second spring (54) and defines an X axis; and
   the third counter-electrode (68a, 94a) comprises two separate electrode areas, wherein the first counter-electrode (66a, 92a) lies along the X axis between the two separate electrode areas of the third counter-electrode (68a, 94a), and the fourth counter-electrode (68b, 94b) comprises two separate electrode areas, wherein the second counter-electrode (66b, 92b) lies along the X axis between the two separate electrode areas of the fourth counter-electrode (68b, 94b).

2. Acceleration sensor according to Claim 1, wherein the torsion axis (60) of the first spring (54) subdivides the first seismic mass (50, 80) into a first partial mass (50a, 80a) on a first side of the torsion axis (60) of the first spring (54) and a second partial mass (50b, 80b) on a second side of the torsion axis (60) of the first spring (54) that is lighter than the first partial mass (50a, 80a), and wherein the torsion axis (60) of the second spring (54) subdivides the second seismic mass (52, 82) into a third partial mass (52a, 82a) on a first side of the torsion axis (60) of the second spring (54) and a fourth partial mass (52b, 82b) on a second side of the torsion axis (60) of the second spring (54) that is heavier than the third partial mass (52a, 82a).

3. Acceleration sensor according to Claim 2, wherein the first seismic mass (50, 80) and the second seismic mass (52, 82) are formed and, in at least one position, arranged in relation to one another such that the entire second partial mass (50b) of the first seismic mass (42) extends into an interspace (64, 86) defined by the second seismic mass (52, 82).

4. Acceleration sensor according to Claim 3, wherein the first seismic mass (50, 80) comprises a first comb-like section having at least one prong and the second seismic mass (52, 82) comprises a second comb-like section having at least two prongs, and wherein the first seismic mass (50, 80) in at least one position is arranged in relation to the second seismic mass (52, 82) in such a way that the at least one prong of the first comb-like section extends into the at least one interspace between the at least two prongs of the second comb-like section.

5. Acceleration sensor according to Claim 4, wherein the first seismic mass (80) comprises at least one third comb-like section and the second seismic mass (82) comprises at least one fourth comb-like section (90).

**Revendications**

1. Capteur d'accélération comprenant :

un boîtier (58) ;
une première masse sismique (50, 80) qui est réalisée sous la forme d'une première bascule antisymétrique et est disposée dans le boîtier (58) par le biais d'au moins un premier ressort (54) de telle sorte que la première masse sismique (50, 80) est positionnable en référence au boîtier (58) autour d'un axe de torsion (60) du premier ressort (54) ;
une deuxième masse sismique (52, 82) qui est réalisée sous la forme d'une deuxième bascule antisymétrique et est disposée dans le boîtier (58) par le biais d'au moins un deuxième ressort (54) de telle sorte que la deuxième masse sismique (52, 82) est positionnable en référence au boîtier (58) autour d'un axe de torsion (60) du deuxième ressort (54) ; et
un dispositif de détection et d'interprétation (66a, 66b, 68a, 68b, 92a, 92b, 94a, 94b) qui est conçu pour déterminer une information concernant des mouvements de rotation correspondants de la première masse sismique (50, 80) et de la deuxième masse sismique (52, 82) en référence au boîtier (58) et fixer une information d'accélération concernant une accélération (69) du capteur d'accélération en tenant compte de l'information déterminée ;
la première masse sismique (50, 80) comportant une première électrode disposée sur le premier côté de l'axe de torsion (60) du premier ressort (54) et une deuxième électrode disposée sur le deuxième côté de l'axe de torsion (60) du premier ressort (54) et la deuxième masse sismique (52, 82) comportant une troisième électrode disposée sur le premier côté de l'axe de torsion (60) du deuxième ressort (54) et une quatrième électrode disposée sur le deuxième côté de l'axe de torsion (60) du deuxième ressort (54),
le dispositif de détection et d'interprétation (66a, 66b, 68a, 68b, 92a, 92b, 94a, 94b) comportant quatre contre-électrodes (66a, 66b, 68a, 68b, 92a, 92b, 94a, 94b) qui sont montées en position fixe par rapport au boîtier (58) et étant configuré de telle sorte qu'un premier condensateur (C1A) entre la première électrode et une première contre-électrode (66a, 92a) associée des quatre contre-électrodes (66a, 66b, 68a, 68b, 92a, 92b, 94a, 94b) et un quatrième condensateur (C2B) entre la quatrième électrode et une quatrième contre-électrode (68b, 94b) associée des quatre contre-électrodes (66a, 66b, 68a, 68b, 92a, 92b, 94a, 94b) sont connectés ensemble pour former une première somme, et un deuxième condensateur (C1B) entre la deuxième électrode et une deuxième contre-électrode (66b, 92b) associée des quatre contre-électrodes (66a, 66b, 68a, 68b, 92a, 92b, 94a, 94b) et un troisième condensateur (C2A) entre la troisième électrode et une troisième contre-électrode (68a, 94a) associée des quatre contre-électrodes (66a, 66b, 68a, 68b, 92a, 92b, 94a, 94b) sont connectés ensemble pour former une deuxième somme, en vue de déterminer une différence entre la première somme et la deuxième somme et fixer l'information d'accélération concernant l'accélération (69) du capteur d'accélération à l'aide de la différence déterminée ;

**caractérisé en ce que**

l'axe de torsion (60) du premier ressort (54) se trouve sur l'axe de torsion (60) du deuxième ressort (54) et définit un axe X ; et

la troisième contre-électrode (68a, 94a) comporte deux surfaces d'électrode séparées, la première contre-électrode (66a, 92a) se trouvant le long de l'axe X entre les deux surfaces d'électrode séparées de la troisième contre-électrode (68a, 94a), et la quatrième contre-électrode (68b, 94b) comporte deux surfaces d'électrode séparées, la deuxième contre-électrode (66b, 92b) se trouvant le long de l'axe X entre les deux surfaces d'électrode séparées de la quatrième contre-électrode (68b, 94b).

2. Capteur d'accélération selon la revendication 1, l'axe de torsion (60) du premier ressort (54) divisant la première masse sismique (50, 80) en une première masse partielle (50a, 80a) d'un premier côté de l'axe de torsion (60) du premier ressort (54) et en une deuxième masse partielle (50b, 80b) d'un deuxième côté de l'axe de torsion (60) du premier ressort (54), laquelle est plus légère que la première masse partielle (50a, 80a), et l'axe de torsion (60) du deuxième ressort (54) divisant la deuxième masse sismique (52, 82) en une troisième masse partielle (52a, 82a) d'un premier côté de l'axe de torsion (60) du deuxième ressort (54) et en une quatrième masse partielle (52b, 82b) d'un deuxième côté de l'axe de torsion (60) du deuxième ressort (54), laquelle est plus lourde que la troisième masse partielle (52a, 82a).

3. Capteur d'accélération selon la revendication 2, la première masse sismique (50, 80) et la deuxième masse sismique (52, 82) étant configurées de telle sorte et disposées l'une par rapport à l'autre de telle sorte que la totalité de la deuxième masse partielle (50b) de la première masse sismique (42) fait saillie dans un espace intermédiaire (64, 86) couvert par la deuxième masse sismique (52, 82).

4. Capteur d'accélération selon la revendication 3, la première masse sismique (50, 80) comportant une première portion en forme de peigne dotée d'au moins une dent et la deuxième masse sismique (52, 82) comportant une deuxième portion en forme de peigne dotée d'au moins deux dents, et la première masse sismique (50, 80) étant disposée dans au moins une position par rapport à la deuxième masse sismique (52, 82) de sorte que l'au moins une dent de la première portion en forme de peigne fait saillie dans l'au moins un espace intermédiaire des au moins deux dents de la deuxième portion en forme de peigne.

5. Capteur d'accélération selon la revendication 4, la première masse sismique (80) comportant au moins une troisième portion en forme de peigne et la deuxième masse sismique (82) au moins une quatrième portion (90) en forme de peigne.

**Fig. 1A**

**Fig. 1B**

**Fig. 1C**

**Fig. 2**

**Fig. 3**

**Fig. 4A**

**Fig. 4B**

**Fig. 4C**

**Fig. 5**

**Fig. 6**

Fig. 7A

Fig. 7B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0773443 A1
- EP 0244581 A1
- US 20080314147 A1
- US 20080173959 A1
- US 20080158370 A1